(19) Europäisches Patentamt
European Patent Office
Office européen des brevets

(11) Veröffentlichungsnummer: **0 148 309**
**A2**

(12) **EUROPÄISCHE PATENTANMELDUNG**

(21) Anmeldenummer: **84104716.0**

(22) Anmeldetag: **26.04.84**

(51) Int. Cl.⁴: **B 01 D 19/04**

(30) Priorität: **04.05.83 DE 3316249**

(43) Veröffentlichungstag der Anmeldung: **17.07.85**
**Patentblatt 85/29**

(84) Benannte Vertragsstaaten: **AT BE CH DE FR GB IT LI NL SE**

(71) Anmelder: **Henkel Kommanditgesellschaft auf Aktien,**
**Postfach 1100 Henkelstrasse 67,**
**D-4000 Düsseldorf-Holthausen (DE)**

(72) Erfinder: **Tesmann, Holger, Dr., Vennstrasse 61,**
**D-4000 Düsseldorf (DE)**
Erfinder: **Hempel, Hans Ulrich, Dr., Wiesengrund 5,**
**D-5063 Overrath/Vilkerath (DE)**
Erfinder: **Müller, Heinz, Engelshöhe 48,**
**D-5600 Wuppertal-Vohwinkel (DE)**
Erfinder: **Grünert, Margarete, Flottheide 9,**
**D-4044 Kaarst 2 (DE)**
Erfinder: **Asbeck, Adolf, Am Langen Weiher 51,**
**D-4000 Düsseldorf (DE)**

(54) **Entschäumer.**

(57) In Wasser schwerlösliche Kieselsäureester der allgemeinen Formel

X
|
RO–Si–OR
|
Y

werden als Schauminhibitoren in schäumenden Systemen eingesetzt. In der obigen Formel bedeuten X und Y die Gruppe –OR oder eine Methylgruppe, R bedeutet eine Polypropylenglykolethergruppe und gegebenenfalls eine Polyethylenglykolethergruppe, die durch Oxalkyl-, Aminoalkyl-, Acyl-, Acylamino-, Dioxalkyl- und Oxyaminoalkylgruppen mit 4 bis 24 C-Atomen substituiert sein kann. Die Gesamtzahl der Glykolethergruppen beträgt 1 bis 100, wobei die Anzahl der Polypropylenglykolethergruppen mindestens gleich oder größer ist als die Anzahl der Ethylenglykolethergruppen.

EP 0 148 309 A2

0148309

4000 Düsseldorf, den 2.5.1983
Henkelstraße 67

HENKEL KGaA
ZR-FE/Patente

Dr. Wa/Rk

Patentanmeldung
D 6629 EP

"Entschäumer"

Bekanntlich besitzen Organopolysiloxane, insbesondere im Gemisch mit Kieselsäureaerogel, schaumdämpfende Eigenschaften und werden daher in großem Umfang als Entschäumer eingesetzt. Ihre Herstellung ist jedoch verhältnismäßig aufwendig, weshalb das Interesse an leichter zugänglichen Entschäumern besteht. Für eine Reihe von Anwendungsgebieten stören ihre stark hydrophobierenden Eigenschaften durch unerwünschte Oberflächeneffekte. Ihre außerordentlich hohe Beständigkeit gegenüber Umwelteinflüssen kann ebenfalls zum Nachteil werden, da einerseits ihre schaumdämpfenden Eigenschaften, beispielsweise bei der Nahrungsmittelherstellung oder Papierbereitung, meist nur kurzzeitig ausgenutzt werden, andererseits die Zeitspanne bis zur Mineralisierung unter Umweltbedingungen sehr groß ist.

Es hat nicht an Versuchen gefehlt, die Organopolysiloxane durch andere Stoffe mit vergleichbarer Entschäumerwirkung zu ersetzen. Zumeist wurden jedoch nur Teillösungen erzielt, d.h. die Ersatzstoffe zeigen nur in ganz bestimmten Systemen bzw. unter speziellen Anwendungsgebieten eine befriedigende Wirkung, versagen jedoch vielfach, wenn die Einsatzbedingungen geändert werden. Es besteht daher nach wie vor großes Interesse an universell einsetzbaren Schauminhibitoren, denen die aufgezeigten Nachteile nicht anhaften.

...

Auf der anderen Seite sind Kieselsäureester von Polyglykolethergruppen enthaltenden Verbindungen bekannt. In "Chemistry, Physics and Application of Surface Active Subtances, Proc. Int. Congr. 4th 1964, Vol. 1 (1967), Seite 199-207, sind Orthokieselsäureester von wasserlöslichen ethoxylierten höhermolekularen Alkoholen und Alkylphenolenbeschrieben, die sich als Pigmentdispergatoren in wäßrigen Medien eignen. Eine schaumdämpfende Wirkung wird nicht beschrieben. Sie kommt diesen Verbindungen wegen ihrer vergleichbar hohen Wasserlöslichkeit auch nicht zu. In der DE-PS 16 44 945 sind Orthokieselsäureester von Polyethylenglykol und Butyl-polyethylenglykol sowie deren Verwendung als Hydrauliköle beschrieben. Eine Verwendung als Schauminhibitor ist nicht offenbart. Schließlich sind in den US-Patentschriften 3,935,133 und 4,097,406 Umsetzungsprodukte aus Siliciumtetrachlorid und Monobutylether von Ethylenoxid-Propylenoxid-Blockpolymeren bekannt, die als Stabilisatoren bei der Herstellung von Polyurethanschäumen eingesetzt werden. Eine Lehre, daß derartige Verbindung eine Entschäumerwirkung besitzen, war diesen Literaturstellen nicht zu entnehmen.

Gegenstand der Erfindung, mit der die eingangs genannte Aufgabenstellung gelöst wird, ist die Verwendung von Kieselsäureestern der allgemeinen Formel

$$\begin{array}{c} X \\ | \\ RO - Si - OR \\ | \\ Y \end{array} \qquad (I)$$

worin X und Y unabhängig voneinander für eine Methylgruppe

...

oder den Rest -O-R stehen und R Polyglykoletherreste darstellen, die gegebenenfalls weitere 4 bis 24 C-Atome aufweisende Substituenten tragen, als Schauminhibitor in schäumenden Systemen.

Die Kieselsäureester leiten sich von folgenden Konfigurationen ab:

$$Si\ (OR)_4 \qquad (Ia)$$

$$CH_3Si\ (OR)_3 \qquad (Ib)$$

$$(CH_3)_2\ Si\ (OR)_2 \qquad (Ic)$$

Vorzugsweise werden Kieselsäureester der Formel Ia eingesetzt, die sich gegenüber denen der Formel Ib und Ic durch eine größere Wirksamkeit auszeichnen.

Als Komponente R kommen beispielsweise die folgenden Verbindungsgruppen in Frage:

$$-(CH_2-CHR^2-O)_a-(CH_2-CHR^3-O)_b-R^1 \qquad (II)$$

in der $R^1$ einen gesättigten oder ungesättigten, linearen oder verzweigten Kohlenwasserstoffrest oder Acylrest mit 4 bis 24, vorzugsweise 6 bis 20 Kohlenstoffatomen oder einen Alkylphenylrest mit linearen oder verzweigten, 4 bis 14 Kohlenstoffatome aufweisenden Alkylrest und $R^2$ und $R^3$ unabhängig voneinander Wasserstoff oder eine $CH_3$-Gruppe bedeuten und wobei a und b für ganze Zahlen stehen mit der Maßgabe, daß ihre Summe 2 bis 100 beträgt, wobei die Alkoxylate entweder ausschließlich Propylenglykolethergruppen oder diese Kombination mit Ethylenglykolethergruppen aufweisen. In Verbindungen, die sowohl Ethylenglykolethergruppen (EO) als auch Propylenglykolethergruppen (PO) enthalten (einer der beiden Reste $R^2$ und $R^3$ steht für

...

Wasserstoff, der andere für $CH_3$), beträgt die Zahl der auf einen Rest $R^1$ entfallenden EO-Gruppen vorzugsweise 1 bis 20, insbesondere 2 bis 15 und die entsprechende Zahl der PO-Gruppen vorzugsweise 1 bis 30, insbesondere 3 bis 25, wobei die Anzahl der PO-Gruppen im Interesse einer verminderten Wasserlöslichkeit vorzugsweise gleich oder größer ist als die der EO-Gruppen. In Verbindungen, die ausschließlich PO-Gruppen aufweisen ($R^2 = CH_3$, $b = 0$) beträgt der Index a vorzugsweise 3 bis 30, insbesondere 4 bis 20.

Die Alkyl- bzw. Acylreste $R^1$ können sich von natürlich vorkommenden oder synthetischen Fettresten ableiten. Beispiele hierfür sind Gemische natürlich vorkommenden Fettsäuren oder der davon abgeleiteten Fettalkohole, z.B. auf der Basis von Cocos-, Palmkern-, Talg-, Rüböl-, Tran- oder Tallölfettsäuren. Als synthetische Verbindungen kommen beispielsweise Oxoalkohole infrage. Auch Verbindungen mit verzweigten Alkylresten, wie Guerbetalkohole, sind geeignet, wie 2-Ethylhexanol, 2-Butyloctanol und 2-Hexyldekanol. Schließlich können auch Reste mit unterschiedlichen Kohlenwasserstoffresten und verschiedenem Alkoxylierungsgrad bzw. unterschiedlichem Aufbau der Polyglykoletherreste in einem Molekül enthalten sein.

Als Ausgangsstoffe für die Komponente R kommen ferner di- bzw. polyfunktionelle hydroxylgruppenhaltige Verbindungen in Betracht. Diese können längerkettige Kohlenwasserstoffreste enthalten, die hinsichtlich ihrer Struktur und Zusammensetzung denen von $R^1$ (siehe vorstehend) entsprechen können. Beispiele hierfür sind alkoxylierte

...

Alkylamine der Formel

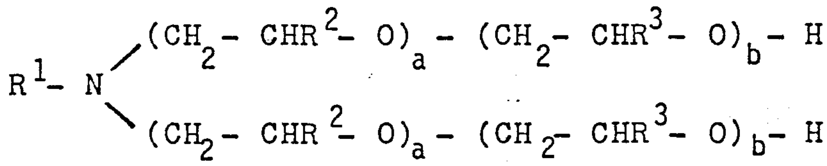

(IIIa)

und Acylamide der Formel

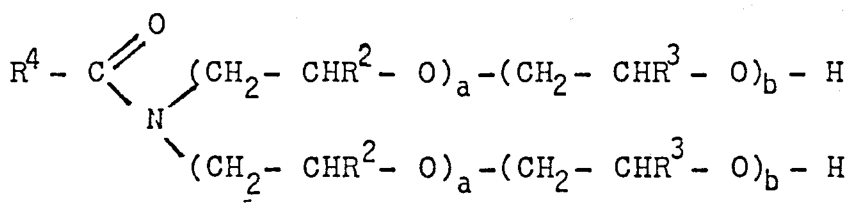

(IIIb)

in denen $R^1$, $R^2$, $R^3$ und die Parameter a und b die vorgenannte Bedeutung haben und der Rest $R^4$ für den um eine $CH_2$-Gruppe verminderten Rest $R^1$ steht.

Weitere polyfunktionelle, längerkettige Kohlenwasserstoffreste enthaltende Komponenten sind Alkoxylierungsprodukte von Diolen der Formel

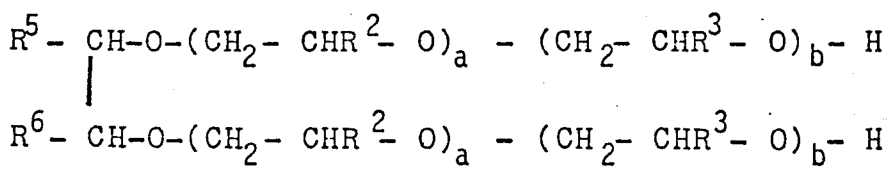

(IVa)

...

von Hydroxyalkylaminen der Formel:

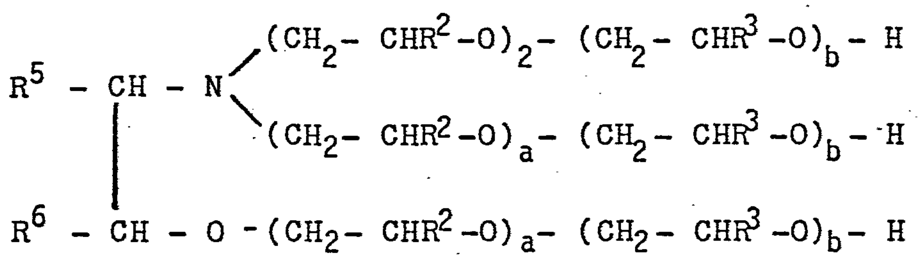

(IVb)

und von Derivaten des Trialkanolamins der Formel

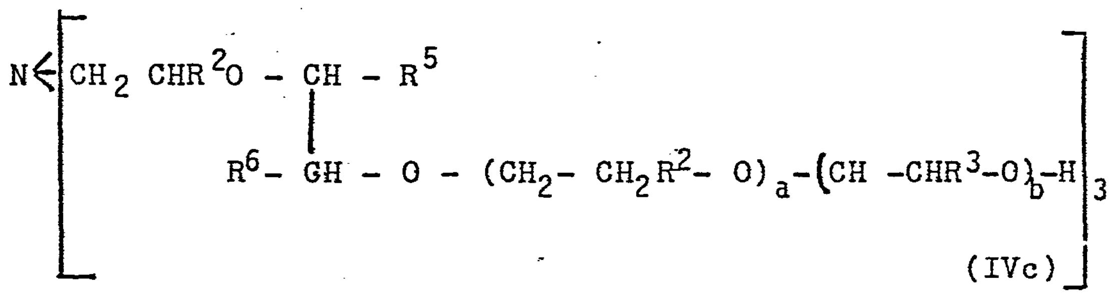

(IVc)

in denen $R^2$, $R^3$, a und b die vorgenannte Bedeutung haben und mindestens einer der Reste $R^5$ und $R^6$ einen Kohlenwasserstoffrest mit 1 bis 24 C-Atomen darstellt und der andere für Wasserstoff oder einen Kohlenwasserstoffrest mit 1 bis 24 C-Atomen steht, mit der Maßgabe, daß die Gesamtzahl der in $R^5$ und $R^6$ enthaltenen C-Atome 6 bis 22 beträgt. Die vorgenannten Komponenten sind beispielsweise durch Umsetzung von $C_6$- $C_{24}$-Epoxiden mit Wasser, Glykol (IVa) oder Alkanolaminen und Oxalkylierung zugänglich.

Hinsichtlich der Anzahl der EO-Gruppen und PO-Gruppen gilt im Hinblick auf die angestrebte verminderte Wasserlöslichkeit für die Komponenten gemäß Formeln III und IV das gleiche wie für die Komponente gemäß Formel II.

...

Weitere di- bzw. polyfunktionelle Komponenten sind die Alkoxylierungsprodukte von Polyolen wie Glycerin, Polyglycerin,Trimethylolpropan,Pentaerythrit und Zuckeralkoholen der Formel:

$$R^7-(O)_n-\left[(CH_2-CHR^2-O)_a-(CH_2-CHR^3-O)_b\right]_m-H_n \quad (V)$$

in der $R^7-(O)_n$ einen 3 bis 24 C-Atome aufweisenden Polyol-Rest darstellt, a + b = 5 bis 100 beträgt, m gleich oder kleiner n, mindestens jedoch 2 ist und n der Zahl von Hydroxylgruppen des Polyols entspricht. Die Zahl der PO-Gruppen soll größer sein als die der EO-Gruppen. Besonders geeignet sind Komponenten der Formel V, die 5 bis 30 PO-Gruppen und keine EO-Gruppen enthalten.

Schließlich kommen als difunktionelle Komponenten noch Polypropylenglykol mit einem Molekulargewicht von 400 bis 6000, vorzugsweise von 1600 bis 3000 infrage, ferner Blockpolymere des Ethylenoxids und des Propylenoxids mit 1 bis 30 EO-Gruppen und 10 bis 100 PO-Gruppen, in denen die Zahl der PO-Gruppen diejenige der EO-Gruppen übertrifft und vorzugsweise ein Mehrfaches davon beträgt.

Die Herstellung der Kieselsäureester erfolgt in an sich bekannter Weise, in dem man die entsprechenden Siliciumhalogenide, insbesondere Siliciumtetrachlorid, Trichlormethylsilan oder Dichlordimethylsilan, mit den entsprechenden alkoholischen Komponenten unter Entfernung des Halogenwasserstoffs umsetzt. Verwendet man Kieselsäureester, insbesondere Tetraethoxysilan, Triethoxymethylsilan oder Diethoxydimethylsilan als Ausgangsmaterial, werden diese mit der alkoholischen Komponente umgeestert, beispielsweise durch Erhitzen eines Gemisches der Reaktionspartner auf 140 ° bis 180 °C unter Abdestillieren des niedermolekularen Alkohols. Man kann auch in Gegenwart bekannter Umesterungskatalysatoren arbeiten.

...

Bei Einsatz di- bzw. polyfunktioneller alkoholischer Komponenten entsprechend Formeln III, IV und V sowie von Polypropylenglykolethern bzw. Blockpolymeren aus Polyethylenglykol und Polypropylenglykol, können sich neben den monomeren Estern auch dimere bzw. oligomere Kieselsäureester bilden, jedoch beträgt deren Anteil bei Einsatz stöchiometrischer bzw. überstöchiometrischer Mengen, d.h. einem Verhältnis von 1 Mol oder mehr an alkoholischer Komponente zu 1 Halogenfunktion bzw. Esterfunktion des Kieselsäurerestes, weniger als 50 %, meist weniger als 30 %. Die dimeren bzw. oligomeren Ester ,deren Anwesenheit sich in einer höheren Viskosität der Produkte zu erkennen gibt, unterscheiden sich hinsichtlich ihrer schauminhibierenden Wirkung nicht wesentlich von monomeren Estern bzw. können sie in bestimmten Fällen noch steigern. Auch der im Produkt verbleibende Überschuß an nicht umgesetztem Alkohol beeinträchtigt die schauminhibierende Wirkung nicht bzw. kann sie in einzelnen Fällen sogar noch steigern.

Bei den vorstehend genannten Kieselsäureestern der Formel Ib und Ic handelt es sich um neuartige chemische Stoffe. Ebenfalls neuartig sind Kieselsäureester der Formel Ia, die sich von Komponenten der Formeln IIIa, IIIb, IVa, IVb, IVc und V sowie von Polypropylenglykol bzw. von Blockpolymeren des Polypropylenglykols und Polyethylenglykols ableiten. Zu den neuen Stoffen zählen weiterhin solche Verbindungen der Formel Ia, in denen die Polyglykolethergruppen ausschließlich aus PO-Gruppen oder aus PO-Gruppen in Kombination mit EO-Gruppe bestehen. Hiervon ausgenommen ist lediglich eine Verbindungen der Formel I, in der R aus einem Butylrest und der Polyglykoletherreste aus einem EO-PO-Blockpolymeren besteht. Die Verbindungen sind, soweit sie neuartig sind ebenfalls Gegenstand der vorliegenden Erfindung.

...

Die Kieselsäureester eignen sich als Schauminhibitoren sowohl für wäßrige als auch nichtwäßrige Systeme. Sie eignen sich daher zur Verwendung in Wasch- und Reinigungsmitteln, in der Papierindustrie, bei der Leimherstellung sowie der Nahrungsmittelindustrie und Biotechnologie z.B. zum Entschäumen von Zucker- bzw. eiweißhaltigen Lösungen sowie von Fermentbrühen. Besonders geeignet sind sie auch zum Entschäumen wäßriger bzw. nichtwäßriger Lack- und Farbsysteme sowie von Kunstharzdispersionen. In der Metall- und Erdölindustrie können sie ebenfalls eingesetzt werden z.B. zum Entschäumen von Bohr- und Schneidölen, Mineralölen und Öldispersionen. Je nach Anwendungszweck können sie allein oder im Gemisch mit anderen bekannten Schauminhibitoren eingesetzt werden, um ihre anwendungstechnischen Eigenschaften noch weiter zu optimieren.

Geeignete zusätzliche Schauminhibitoren sind z.B. Paraffinöle bzw. Paraffine einschließlich mikrokristalliner Paraffine, fette Öle wie Triglyceride und Partialglyceride, Esterwachse, Fettalkohole und Guerbetalkohole sowie deren Alkoxylierungsprodukte, Polypropylenglykol und Blockpolymere aus Polypropylenglykol mit Polyethylenglykol sowie deren Monalkylether, z.B. Monobutylether, oder deren Mono- bzw. Diester mit gesättigten $C_{16}$- $C_{24}$-Fettsäuren bzw. -Hydroxyfettsäuren. Weiterhin kommen propoxyliertes Glycerin bzw. Polyglycerin in Frage. Je nach Anwendungsgebiet und beabsichtigter Wirkung kommen 0,001 bis 3 Gew.-% Kieselsäureester, bezogen auf das schäumende Substrat zum Einsatz. In Mischungen mit anderen Schauminhibitoren, welche die Kieselsäureester

...

in ihrer Wirkung zu steigern oder teilweise zu ersetzen zu vermögen, kann der Anteil der Kieselsäureester z.B. 1 bis 50 Gew.-% betragen und auch die Einsatzmenge, bezogen auf das Substrat, gegebenenfalls noch weiter herabgesetzt werden.

Die Kieselsäureester sind farblose bis gelbliche Substanzen, die je nach Art der Estergruppierungen flüssig bis zähflüssig und auch von schmalzartiger Konsistenz sein können. Sie lassen sich mit Hilfe bekannter Emulgatoren, z.B. alkoxylierten Fettalkoholen bzw. Alkylphenolen, in Wasser emulgieren und in dieer Form einsetzen. Für bestimmte Anwendungsgebiete, z.B. bei Einsatz in Wasch- und Reinigungsmitteln kann es zweckmäßig sein, sie auf ein Trägermaterial, z.B. anorganische Salze oder Adsorptionsmittel aufzubringen bzw. in Mikrokapseln oder wachsartigen, wasserlöslichen bzw. in Wasser dispergierbaren organischen Materialien einzubetten bzw. damit zu überziehen, um Wechselwirkungen zwischen den aktiven Reinigungsmittelbestandteilen, wie Tensiden oder starken Alkalien, zu vermeiden. Sie können auch in organischen Lösungsmitteln bzw. Mineralölen gelöst bzw. dispergiert werden. ...

## Beispiele

Die Herstellung einer Reihe der nachfolgend beschriebenen Kieselsäureester erfolgte in der Weise, daß Tetraethoxysilan (TES), Triethoxymethylsilan (TMS) oder Diethoxydimethylsilan (DDS) mit der Alkoholkomponente im angegebenen molaren Verhältnis gemischt und 2 Stunden unter Rühren unter Stickstoff auf Temperaturen zwischen 150 und 160 °C am Rückfluß erhitzt wurden. Anschließend wurde die Temperatur auf 175 °C gesteigert und das bei der Umesterung freigewordene Ethanol abdestilliert.

In den Fällen, in denen von Siliciumtetrachlorid (STC) ausgegangen wurde, erfolgt die Umsetzung in der Weise, daß zu der Alkoholkomponente unter starkem Rühren das STC im Verlauf von 30 Minuten zugetropft wurde. Nach 2-stündigem Erhitzen bei 15 Torr wurden die Schmelzen mit Aktivkohle versetzt und unter Verwendung eines Filterhilfsmittels bei Raumtemperatur filtriert.

Es wurden folgende Alkoholkomponenten eingesetzt:

A1 Nonylphenol + 9EO + 10PO
A2 Nonylphenol + 1EO + 1PO
A3 $C_{12}$- $C_{14}$- Fettalkohol + 10PO
A4 $C_{12}$- $C_{18}$- Fettalkohol + 5EO + 4PO
A5 $C_{12}$- $C_{18}$- Fettalkohol + 5EO + 13PO
A6 $C_{12}$- $C_{18}$- Fettalkohol + 2 EO + 4PO
A7 Isononanol + 10PO
A8 Isotridecanol + 2EO + 4PO

...

A9 Isotridecanol + 31PO

A10 2-Ethylhexanol + 5PO

A11 2-Hexyldecanol + 10PO

A12 Tranfettsäure + 20PO

A13 Polypropylenglykol (MG = 2020)

A14 Blockpolymer aus 1,2-Propylenglykol + 30PO + 4,5EO

A15 Polyglycerin + 8PO

A16 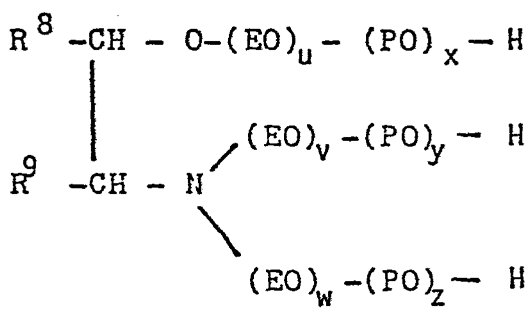

mit $R^8$, $R^9$ = Alkylreste mit insgesamt 9 - 11 C-Atomen (aus innenständigen vicinalen Epoxiden)

a) $u + v + w = 4$
$x + y + z = 4$

b) $u + v + w = 4$
$x + y + z = 10$

c) $u + v + w = 0$
$x + y + z = 6$

d) $u + v + w = 0$
$x + y + z = 12$

e) $u + v + w = 0$
$x + y + z = 18$

$R^8$, $R^9$ = Alkylreste mit insgesamt 15 - 17 C-Atomen:

f) $u + v + w = 0$
$x + y + z = 10$

...

A17 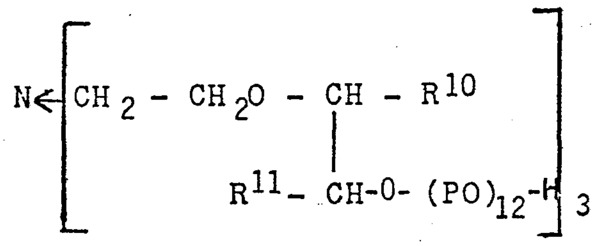

Einer der beiden Reste R $^{9}$ und R $^{10}$ = $C_{12}$- $C_{14}$-Alkyl, der andere Wasserstoff (aus 1,2 Epoxiden).

A18 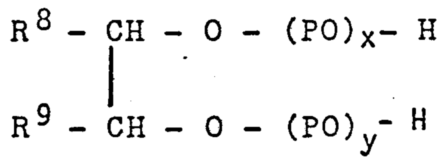

$R^8$ + $R^9$ = Alkylreste mit insgesamt 9 - 11 C-Atomen:

a) x + y = 9
b) x + y = 15

$R^8$ + $R^9$ = Alkylreste mit insgesamt 13 C-Atomen:

c) x + y = 9
d) x + y = 15

Die Molverhältnisse der eingesetzten Ausgangsmaterialen (Mol Si-Verbindung zu Mol Alkoholkomponente) sind in der Tabelle 1 aufgeführt, ebenso die bei 22 °C nach BROOKFIELD bestimmte Viskosität der Endprodukte. Aus dem analytisch bestimmten Chlorgehalt von 0,02 % und weniger im Endprodukt errechnet sich in den Fällen, in denen Siliciumtetrachlorid als Ausgangsmaterial verwendet wurde, eine Ausbeute von über 99,5 %. Eine ebenfalls quantitative Ausbeute ergab sich bei Einsatz von Alkoxysilanen als Ausgangsmaterial; lediglich in den Fällen, in denen das Produkt mit Aktivkohle behandelt und filtriert worden war, lag sie infolge der dabei entstehenden Verluste geringfügig darunter. ...

Tabelle 1

| Beispiel | Si-Komponente | Alkohol-Komponente | Mol-Verhältnis | Viskosität mPa-s |
|---|---|---|---|---|
| 1 | STC | A1 | 1 : 4 | 470 |
| 2 | TES | A1 | 1 : 4,4 | 285 |
| 3 | TMS | A1 | 1 : 3,3 | 265 |
| 4 | STC | A2 | 1 : 4,4 | 4250 |
| 5 | STC | A3 | 1 : 5 | 120 |
| 6 | STC | A4 | 1 : 5 | 133 |
| 7 | STC | A5 | 1 : 5 | 252 |
| 8 | STC | A6 | 1 : 4,9 | 124 |
| 9 | STC | A7 | 1 : 5 | 110 |
| 10 | STC | A8 | 1 : 5 | 140 |
| 11 | STC | A9 | 1 : 5 | 285 |
| 12 | STC | A10 | 1 : 5 | 96 |
| 13 | STC | A11 | 1 : 5 | 202 |
| 14 | TES | A12 | 1 : 4 | 128 |
| 15 | TES | A13 | 1 : 4 | 510 |
| 16 | TES | A14 | 1 : 4 | 5000 |
| 17 | TES | A15 | 1 : 8 | 3300 |
| 18 | TES | A16a | 1 : 4,4 | 5650 |
| 19 | TES | A16a | 1 : 4,6 | 3200 |
| 20 | TES | A16a | 1 : 4,7 | 2000 |
| 21 | TES | A16a | 1 : 5,1 | 1280 |
| 22 | TES | A16b | 1 : 5,1 | 4000 |
| 23 | TES | A16c | 1 : 3,8 | 9200 |
| 24 | TES | A16c | 1 : 4,2 | 2350 |
| 25 | TES | A16c | 1 : 4,6 | 1600 |
| 26 | TES | A16d | 1 : 4,6 | 6300 |
| 27 | TES | A16e | 1 : 5,1 | 4650 |
| 28 | TES | A16e | 1 : 5,6 | 660 |
| 29 | TES | A16f | 1 : 4,6 | 1340 |
| 30 | TMS | A16d | 1 : 3,4 | 1620 |

...

| | | | | |
|---|---|---|---|---|
| 31 | DDS | A16d | 1 : 2,5 | 630 |
| 32 | TES | A17 | 1 : 5 | 3200 |
| 33 | TES | A18a | 1 : 4,2 | 1740 |
| 34 | TES | A18b | 1 : 4,2 | 4250 |
| 35 | TES | A18c | 1 : 4,2 | 2750 |
| 36 | TES | A18d | 1 : 4,2 | 4200 |

...

Die Entschäumer wurden verschiedenen anwendungstechnischen Prüfungen unterzogen. In einer 1. Versuchsreihe wurden folgende Versuchslösungen verwendet:

A) Alkalische wäßrige Reinigungslösung, enthaltend 15g/l Natriummetasilikat und 0,2 g/l Dodecylbenzolsulfonat und 0,5 ml/l einer 10 %igen Lösung des Entschäumers in Dioxan.

B) Wäßrige Lösung von 2 g/l Nonylphenol + 10EO und 1 ml/l einer 10 %igen Lösung des Entschäumers in Dioxan.

C) Wäßrige Lösung von 2 g/l Ditalgalkyldimethylammoniumchlorid und 1 ml/l einer 10 %igen Lösung des Entschäumers in Dioxan.

Die Bestimmung erfolgte nach dem Verfahren gemäß DIN 53902 bei 25 °C. Bei dieser Bestimmungsmethode werden 200 ml Lösung in Meßzylinder von 1 Liter Inhalt gefüllt. Die Schaumerzeugung erfolgt mittels motorisch angetriebener Lochscheiben, die wiederholt in die Oberfläche der Lösung eingetaucht und wieder herausgezogen werden. Nach 30 Sekunden (31 Schläge) wird der Motor abgestellt und die Höhe der Schaumsäule nach weiteren 30 Sekunden bestimmt. Die Messung der Schaumhöhe wird im Minutenabstand wiederholt. In Tabelle 2 sind die Ergebnisse aufgeführt. Die Zeitangaben beziehen sich auf Minuten nach Abstellen des Motors.

...

Tabelle 2

| Ester nach Beispiel | Lösung | Schaumhöhe nach Minuten 0,5 | 1 | 2 | 5 |
|---|---|---|---|---|---|
| 1 | A | 30 | 20 | 20 | 10 |
| 2 | | 20 | 20 | 20 | 10 |
| 3 | | 100 | 50 | 40 | 30 |
| 6 | | 40 | 30 | 30 | 20 |
| 8 | | 40 | 30 | 30 | 10 |
| 12 | | 30 | 20 | 20 | 10 |
| 13 | | 20 | 20 | 20 | 10 |
| 14 | | 20 | 20 | 10 | 10 |
| 15 | | 20 | 20 | 10 | 10 |
| 16 | | 40 | 40 | 30 | 20 |
| 17 | | 30 | 20 | 20 | 10 |
| - | | 180 | 180 | 180 | 160 |
| 8 | B | 70 | 70 | 60 | 30 |
| 12 | | 80 | 80 | 60 | 50 |
| 13 | | 30 | 20 | 20 | 20 |
| 14 | | 40 | 40 | 40 | 30 |
| 15 | | 30 | 20 | 20 | 10 |
| 16 | | 90 | 90 | 60 | 50 |
| - | | 380 | 380 | 380 | 380 |
| 2 | C | 130 | 90 | 70 | 60 |
| 8 | | 20 | 20 | 20 | 20 |
| 12 | | 100 | 80 | 80 | 60 |
| 13 | | 40 | 30 | 30 | 20 |
| 14 | | 20 | 10 | 10 | 10 |
| 15 | | 20 | 10 | 10 | 10 |
| - | | 310 | 310 | 310 | 300 |

...

In einer zweiten Versuchsreihe wurde eine wäßrige Lösung D von 200 g/l Melasse und nach der " Freifallkreislaufmethode" zerschäumt. Hierzu werden in einem Meßzylinder (2 Liter Inhalt) 500 ml einer 20 %igen Melasselösung eingefüllt. Mittels einer Laborschlauchpumpe wird diese Testlösung derart in einen kontinuierlichen Umtrieb gebracht, daß die Lösung mit einem Glasrohr vom Boden des Meßzylinders angesaugt und über ein zweites, mit der Oberkante des Meßzylinders abschließendes Glasrohr in freiem Fall zurückgeführt wird. Bei einer Umwälzleistung von 4 l/min stellt sich hierbei ein konstantes dynamisches Schaumvolumen zwischen 1800 - 2000 ml ein. Anschließend werden mit einer Mikropipette 0,05 ml einer 10 %igen Lösung des zu prüfenden Entschäumers auf die Schaumsäule aufgetropft und die sich dann ergebenden Schaum- bzw. Gesamtvolumina in Zeitabständen von 1/2, 1, 2, 3, 5, 10, 20 und 30 min abgelesen. Der Entschäumer liegt als 10 %ige Lösung in Dioxan vor, das als inertes Lösungsmittel des Schaum nicht beeinflußt.

...

Tabelle 3

| Entschäumer nach Beispiel | Schaumhöhe in Minuten 0,5 | 1 | 2 | 5 |
|---|---|---|---|---|
| 2 | 620 | 620 | 640 | 760 |
| 5 | 600 | 620 | 640 | 720 |
| 14 | 600 | 660 | 680 | 720 |
| 16 | 540 | 580 | 600 | 720 |
| 17 | 600 | 620 | 620 | 700 |
| 26 | 540 | 540 | 580 | 640 |
| 34 | 550 | 560 | 600 | 680 |
| - | 1400 | 1600 | 1800 | 1800 |

Die übrigen in Tabelle 1 aufgeführten Kieselsäureester zeigten unter gleichen Versuchsbedingungen in den untersuchten Lösungen A bis D ähnliche Schaumwerte. Es traten lediglich geringfügige graduelle Unterschiede auf.

...

In einer dritten Versuchsreihe wurden die Kieselsäureester als auf Ihre schauminhibierende Wirkung in Glanzlacken geprüft. Für dieses Anwendungsgebiet ist es besonders wichtig, daß die Bildung von Mikroschäumen unterdrückt wird, da diese zur Bildung von Poren und Kratern in der Lackschicht führen, wodurch sich der Glanz vermindert und die Oberflächenschutzwirkung verschlechtert wird. Als Testlack diente ein wäßriger Polyacrylat-Lack, der mittels einer Schwammwalze bzw. einer Lammfellrolle auf Glas- und Holzplatten aufgestrichen und nach dem Trocknen untersucht wurde.

Es wurden folgende Bewertungen vergeben:

1 = sehr starker Lufteinschluß
2 = starker Lufteinschluß
3 = mäßiger Lufteinschluß
4 = wenig Lufteinschluß
5 = sehr wenig Lufteinschluß
6 = kein Lufteinschluß

...

Als Entschäumer dienten die folgenden, für derartige Lacksysteme besonders entwickelten Zusammensetzungen

| | E1 | E2 |
|---|---|---|
| Kieselsäureester bzw. Vergleichssubstanz | 14,0 | 6,0 |
| Mineralöl | 63,4 | 80,5 |
| Polypropylenglykol-dibehenat | 9,0 | - |
| PO-EO-Blockpolymer (30PO, 4,5EO) | 6,3 | - |
| Magnesiumdistearat | 2,7 | - |
| Aluminiumstearat | 2,3 | 1,5 |
| Kieselsäureaerogel | - | 2,0 |
| Hydroxystearylmonobehenat | - | 7,0 |
| Emulgator (Nonylphenol + 8EO) | 2,3 | 3,0 |

Es wurden die Kieselsäureester gemäß Beispiel 18 bis 36 eingesetzt, als Vergleichssubstanzen dienten 2 handelsübliche Silikonentschäumer. Es ergaben sich folgende Bewertungen:

| Probe | Film- und Oberflächenbeurteilung | Schaumbeurteilung |
|---|---|---|
| Beispiele 18-29 und 32-36 | schaumfrei | 5 |
| Beispiele 30 und 31 | fast schaumfrei | 4 - 5 |
| Silikonöl AK 10 | Schaumfilm | 1 |
| Silikonöl AK 6000 | Schaumfilm | 1 |
| Tetraethoxysilan | Schaumfilm | 1 - 2 |

Bei Beispiel 30 und 31 ergaben sich oberflächlich sehr geringe Verlaufsstörungen, in den Vergleichsversuchen mit Silikonölen waren diese Verlaufsstörungen sehr ausgeprägt.

...

## Patentansprüche

1. Verwendung von in Wasser schwerlöslichen Kieselsäureestern der allgemeinen Formel

$$\begin{array}{c} X \\ | \\ RO - Si - OR \\ | \\ Y \end{array} \qquad (I)$$

worin X und Y unabhängig voneinander für eine Methylgruppe oder den Rest -O-R stehen und R Polyglykoletherreste darstellen, die gegebenenfalls weitere, 4 bis 24 C-Atome aufweisende Substituenten tragen, als Schauminhibitoren in schäumenden Systemen.

2. Verwendung von Verbindungen nach Anspruch 1, worin R in der Formel I aus einem Propylenglykolethergruppen und gegebenenfalls Ethylenglykolethergruppen aufweisenden Rest besteht, der durch 4 bis 24 C-Atome aufweisende Oxalkyl-, Aminoalkyl-, Acyl-, Acylamino-, Dioxyalkyl- und Oxyaminoalkyl-Reste bzw. durch 3 bis 24 C-Atome aufweisende Polyoxyalkyl-Reste substituiert ist.

3. Verwendung von Verbindungen nach Anspruch 1 und 2, worin die Gesamtzahl der in den Resten R enthaltenen Glykolethergruppen 1 bis 100 beträgt und die Anzahl der Propylenglykolethergruppen gleich oder größer ist als die Anzahl der Ethylenglykolethergruppen.

4. Verwendung von Verbindungen nach Anspruch 1, worin R für einen Polypropylenglykoletherrest mit einem Molekulargewicht von 400 bis 6000 steht.

...

5. Verwendung von Verbindungen nach Anspruch 1, worin R für den Rest eines Blockpolymeren aus Propylenoxid und Ethylenoxid mit 1 bis 30 Ethylenglykolethergruppen und 10 bis 100 Propylenglykolethergruppen steht mit der Maßgabe, daß die Anzahl der Propylenglykolethergruppen die Anzahl der Ethylenglykolethergruppen übertrifft.

6. Verwendung der Verbindungen nach Anspruch 1 bis 5 in wäßrigen Systemen.

7. Verbindung der Formel I

$$RO - \overset{\overset{X}{|}}{\underset{\underset{Y}{|}}{Si}} - OR \qquad (I)$$

worin X und Y unabhängig voneinander für eine Methylgruppe oder den Rest -O-R stehen und worin R einen Polypropylenglykolethergruppen und gegebenenfalls Polyethylenglykolethergruppen aufweisenden Polyetherrest darstellt, der gegebenenfalls weitere, 4 bis 24 C-Atome aufweisende Substituenten trägt.